# EUROPEAN PATENT SPECIFICATION

(11) **EP 2 921 950 B1**
(45) Date of publication and mention of the grant of the patent: **12.02.2020**
(21) Application number: 15159065.0
(22) Date of filing: 13.03.2015
(51) Int. Cl.: G06F 3/12, G06F 17/21, H04L 29/08, H04W 88/02

(54) **Terminal device, information sharing system, and information sharing method**
Endgerät, Informationsteilungssystem und Informationsteilungsverfahren
Dispositif de terminal, système et procédé de partage d'informations

(30) Priority: 18.03.2014 JP 2014055682
(43) Date of publication of application: 23.09.2015
(73) Proprietor: Ricoh Company, Ltd., Tokyo 143-8555 (JP)
(72) Inventor: Murata, Jun, Ohta-ku, Tokyo 143-8555 (JP)
(74) Representative: White, Duncan Rohan

(56) References cited:
- EP-A1- 0 991 228
- US-A1- 2013 141 747

## Description

### BACKGROUND OF THE INVENTION

### 1. Field of the Invention

The present invention relates to a terminal device, an information sharing system, and an information sharing method which share data through a network .

### 2. Description of the Related Art

Material used in a meeting or the like has been typically distributed, in the related art, by first preparing the material with an information processing device such as a personal computer (hereinafter referred to as a PC) and then printing the material on a piece of paper with a printer device.

A printer driver used to perform printing while controlling the printer device from the PC can output print data as image data in a PDF (Portable Document Format) or the like by a procedure similar to that of printing data on a piece of paper according to the print data. Outputting the print data as the image data saves time and effort to perform printing and also has an advantage of not consuming paper resources.

Moreover, Japanese Laid-Open Patent Publication No. 2013-120439 discloses a technique in which an operation such as a print instruction can be performed more easily.

When the print data of material or the like is output as the image data as described above, a distributor of the material distributes the data by employing a method of attaching prepared material image data to an e-mail and sending the data to a destination, for example. A user who receives the distributed material image data can view the distributed material by retrieving the material image data being received from a predetermined storage location on the PC and opening the data with an image viewing application or the like installed on the PC.

Now, when the material is distributed by printing the print data on a piece of paper with the printer device, the user who receives the material can view the material on the spot. When the material is distributed by outputting the print data as the image data, on the other hand, the user at the destination can view the material only after going through the operation of retrieving the received image data from the predetermined storage location on the PC and opening the data with the image viewing application or the like.

Moreover, a new process of transmitting the image data to each user is added to the distributor of the material, as compared with the distribution on a piece of paper involving the flow of selecting the print data and giving a print instruction. At this time, there may be a case where processing such as compression and archiving of the transmitted image data is further added.

Accordingly, it has not always been convenient for the user to perform processing while selecting whether to distribute the data he wishes to distribute by printing or as electronic data.

In view of the foregoing, there is a need to further improve the convenience in distributing data.

US/2013/0141747A discloses a mobile device in short-range communication with printers which are each selectable from those within a predetermined distance.

EP0991228A discloses a server listing available print devices.

It is an object of the present invention to at least partially solve the problems in the conventional technology. There is provided a terminal device in accordance with claim 1, an information sharing system in accordance with claim 4, and an information sharing method in accordance with claim 8.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating an example of a configuration that can be applied to an information sharing system according to a first embodiment;
FIG. 2 is a diagram schematically illustrating the information sharing system according to the first embodiment;
FIG. 3 is an example of a functional block diagram illustrating a function of a provision terminal that can be applied to the first embodiment;
FIG. 4 is an example of a functional block diagram illustrating a function of a receiver terminal according to the first embodiment;
FIG. 5 is an example of a functional block diagram illustrating a function of a relay server according to the first embodiment;
FIG. 6 is a block diagram illustrating an example of a configuration that can be applied in common to each terminal device according to the first embodiment;
FIG. 7 is a diagram illustrating a network architecture of DLNA;
FIG. 8 is a diagram schematically illustrating a communication procedure according to the DLNA;
FIGS. 9A and 9B are diagrams each illustrating an example of an M-search message;
FIG. 10 is a diagram illustrating an example of a response to the M-search message;
FIG. 11A is a diagram illustrating an example of a description;
FIG. 11B is a diagram illustrating an example of a description;
FIG. 12A is a diagram illustrating an example of an SOAP message transmitted in the communication procedure of the DLNA;
FIG. 12B is a diagram illustrating an example of an SOAP message transmitted in the communication procedure of the DLNA;
FIG. 12C is a diagram illustrating an example of an SOAP message transmitted in the communication procedure of the DLNA;
FIG. 13 is a sequence diagram illustrating an example of registration processing of identification information of the terminal device according to the first embodiment;
FIG. 14 is a sequence diagram illustrating an example of association processing of the terminal device according to the first embodiment;
FIG. 15 is a diagram illustrating an example of a list registered in the relay server according to the first embodiment;
FIG. 16 is a sequence diagram illustrating an example of content transmission processing from the provision terminal to the receiver terminal registered in the list according to the first embodiment;
FIG. 17 is a diagram illustrating an example of a print setting screen according to the first embodiment;
FIG. 18 is a diagram illustrating an example of a list screen of the receiver terminal according to the first embodiment;
FIG. 19 is a block diagram schematically illustrating an information sharing system according to a second embodiment; and
FIG. 20 is a block diagram illustrating an example of a configuration of a terminal device that can be applied to the information sharing system according to the second embodiment.

### DETAILED DESCRIPTION OF THE PREFERRED EMBODIMENTS

Embodiments of a terminal device, an information sharing system, and an information sharing method will now be described in detail with reference to the drawings.

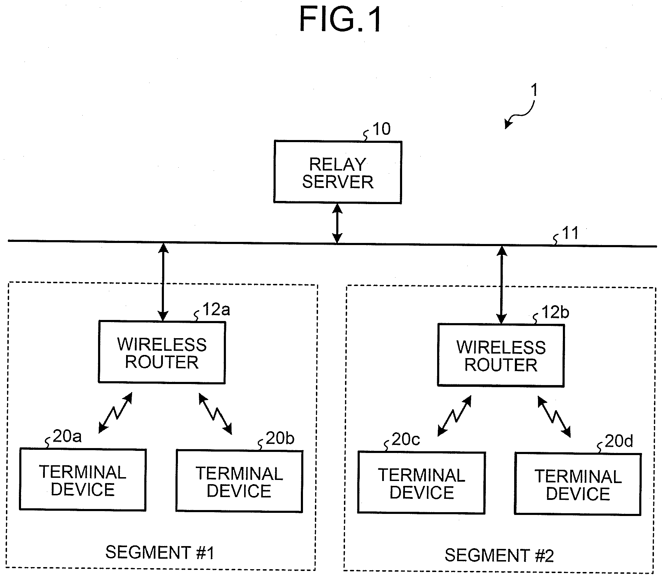

FIG. 1 is a block diagram illustrating an example of a configuration that can be applied to an information sharing system according to a first embodiment. As illustrated in FIG. 1, an information sharing system 1 according to the first embodiment includes a relay server 10 and a plurality of terminal devices 20a, 20b, 20c, and 20d each of which can be wirelessly connected to a network. In the example illustrated in FIG. 1, the terminal devices 20a and 20b are connected to a network 11 through a wireless router 12a. Likewise, the terminal devices 20c and 20d are connected to the network 11 through a wireless router 12b.

Each of the terminal devices 20a, 20b, 20c, and 20d is an information processing device including a CPU (Central Processing Unit), a ROM (Read Only Memory), a RAM (Random Access Memory), a storage, an operation unit, and a display unit. A personal computer (hereinafter abbreviated as PC), a tablet PC, a notebook PC, and a multifunctional mobile phone terminal (smartphone) can be applied as the terminal devices 20a, 20b, 20c, and 20d, for example.

The relay server 10 is connected to the wireless routers 12a and 12b through the network 11 to be able to perform communication with each of the terminal devices 20a, 20b, 20c, and 20d. Moreover, the terminal devices 20a, 20b, 20c, and 20d can communicate with one another through the wireless routers 12a and 12b and the network 11. Here, in the example illustrated in FIG. 1, the terminal devices 20a and 20b and the terminal devices 20c and 20d are connected to the network 11 through the different wireless routers 12a and 12b and belong to different segments #1 and #2, respectively. Therefore, multicast communication cannot be performed between the terminal devices 20a and 20b and the terminal devices 20c and 20d.

While FIG. 1 illustrates four of the terminal devices 20a, 20b, 20c, and 20d as an example, there may be connected a smaller or larger number of terminal devices as well. While FIG. 1 further illustrates the relay server 10 as one device, the relay server 10 can also be configured as an information processing system using a network cloud. The network cloud including a plurality of computers connected to one another via a network is a network group provided as a black box, the inside of which is hidden from the outside, which only shows input and output. The relay server 10 may also be configured by a plurality of information processing devices connected to one another or by a single information processing device.

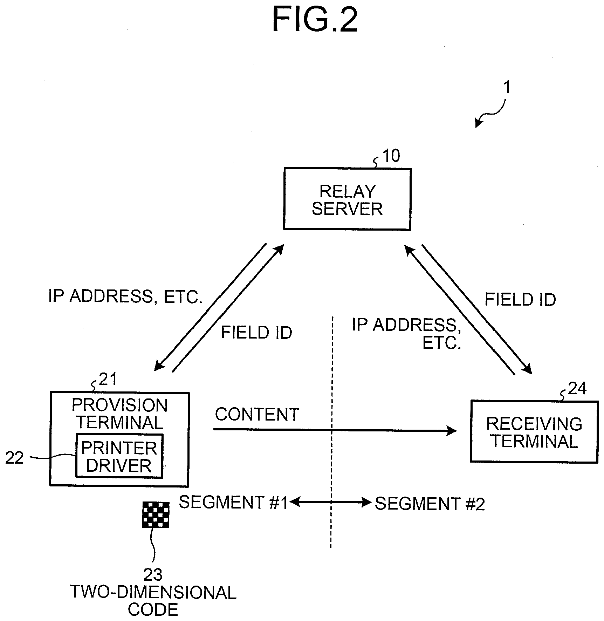

FIG. 2 schematically illustrating the information sharing system 1 according to the first embodiment is now referenced to describe the overview of communication processing performed in the information sharing system 1. Note that a part common to both FIGS. 1 and 2 is assigned the identical reference numeral and will not be described in detail in FIG. 2. It is assumed that a provision terminal 21 and a receiver terminal 24 in FIG. 2 correspond to the terminal devices 20a and 20c in FIG. 1, respectively. Belonging to the different segments #1 and #2 as described above, the terminal devices 20a and 20c cannot perform the multicast communication with each other.

The provision terminal 21 employs a printer driver 22 to convert a content prepared by a document preparation application or the like into print data and outputs the data. The printer driver 22 can select a destination to which the print data is output from among a plurality of printer devices or the like.

The printer driver 22 includes an image data output as a destination to which the print data is output, or to which the print data formed by converting the content is further converted into image data to be output. In this case, a PDF (Portable Document Format) can be applied as a format of the image data being converted. The print data may also be converted into data in a format other than the PDF. Moreover, the printer driver 22 according to the first embodiment can send the image data formed by converting the print data to another terminal device when selecting the image data output as the destination to which the print data is output.

Here, there will be considered a case where the image data formed by converting the content is transmitted from the provision terminal 21 to the receiver terminal 24. Note that the image data formed by converting the content will be hereinafter simply referred to as the content unless otherwise specified. The content in this case refers to a piece of data that a user using the provision terminal 21 wishes to distribute. In the first embodiment, it is assumed that the content is transmitted from the provision terminal 21 to the receiver terminal 24 by employing a communication method developed by DLNA (Digital Living Network Alliance) (this communication method will be hereinafter referred to as a DLNA) . When the receiver terminal 24 includes a reproduction application compatible with the DLNA, the DLNA can be used to be able to easily view the content transmitted from the provision terminal 21 on the receiver terminal 24.

While details will be described later, procedures to realize transmission of the content are performed by using the multicast communication according to the DLNA. This means that the content cannot be transmitted from the provision terminal 21 to the receiver terminal 24 by the DLNA where the provision terminal 21 and the receiver terminal 24 are simply connected through the network 11. In the first embodiment, the provision terminal 21 and the receiver terminal 24 can realize transmission/reception of the content according to the DLNA between different segments by performing the communication procedure according to the DLNA while using the relay server 10 as a proxy.

Each of the provision terminal 21 and the receiver terminal 24 illustrated in FIG. 2 requests its own identification number from the relay server 10 when starting up, for example. In response to the request, the relay server 10 generates identification information of each of the provision terminal 21 and the receiver terminal 24 and transmits the information to the provision terminal 21 and the receiver terminal 24. Each of the provision terminal 21 and the receiver terminal 24 uses the identification information acquired here as a device ID which identifies the own terminal from this point on.

Next, the device ID of each of the provision terminal 21 and the receiver terminal 24 is registered in the relay server 10. This registration allows the provision terminal 21 to select the receiver terminal 24 to which the content is transmitted. At this time, the provision terminal 21 converts the own device ID transmitted from the relay server 10 to an image and outputs the image as an identification image 23. The provision terminal 21 may output the identification image 23 by displaying the identification image 23 on a display unit which displays an image on a display device, or by printing the image on a piece of paper with a printer device. The identification image 23 can be a two-dimensional code such as a QR code (Registered Trademark).

The receiver terminal 24 having an image capturing function of capturing the image of the identification image 23 that is output on the provision terminal 21, decodes the acquired identification image 23, and acquires the device ID of the provision terminal 21. The receiver terminal 24 transmits to the relay server 10 a first device ID of the provision terminal 21 acquired from the identification image 23 and a second device ID of the receiver terminal 24 itself. The relay server 10 registers the first and second device IDs transmitted from the receiver terminal 24 in association with each other. When receiving the first device ID and the second device ID from a plurality of the receiver terminals 24, the relay server 10 puts together the second device IDs by a common first device ID and registers it as a list, for example.

When the provision terminal 21 transmits the content to the receiver terminal 24 upon completing the aforementioned preparation, the provision terminal 21 first performs an operation of printing the content prepared by the document preparation application or the like. At this time, the provision terminal 21 selects another terminal device (receiver terminal 24), which is connected through the network 11, as a destination to which the print data is output.

That is, the provision terminal 21 requests from the relay server 10 the list in which the first device ID identifying the own terminal is associated with the second device ID of the receiver terminal 24, and selects from the list the receiver terminal 24 to which the print data is output. The provision terminal 21 transmits, to the relay server 10, a message including the first device ID and the second device ID which identifies the selected receiver terminal 24.

In response to the message transmitted from the provision terminal 21, the relay server 10 generates a field ID which is a piece of identification information common to the first and second device IDs included in the message. The relay server 10 transmits the generated field ID to each of the provision terminal 21 and the receiver terminal 24. Each of the provision terminal 21 and the receiver terminal 24 receiving the field ID transmits an IP address and a name of the own terminal to the relay server 10. The relay server 10 manages the IP address and the name of each of the provision terminal 21 and the receiver terminal 24 in association with the field ID.

From that point on, the provision terminal 21 and the receiver terminal 24 perform communication with each other according to the communication procedure of the DLNA so that the content can be transmitted from the provision terminal 21 to the receiver terminal 24. The provision terminal 21 and the receiver terminal 24 at this time perform the communication according to the communication procedure of the DLNA through the relay server 10 while using the field ID.

The relay server 10 is configured on a cloud network or the like on the Internet. Accordingly, when performing communication from the provision terminal 21 to the receiver terminal 24, each communication procedure according to the DLNA is transmitted to the relay server 10 while wrapped by a versatile protocol such as an HTTP (Hypertext Transfer Protocol) used in transferring the content on the Internet. As a result, the communication procedure according to the DLNA can be performed across segments from the provision terminal 21 to the receiver terminal 24.

Note that once the communication procedure according to the DLNA is completed, the provision terminal 21 can transmit the content to the receiver terminal 24 directly, or without the intervention of the relay server 10.

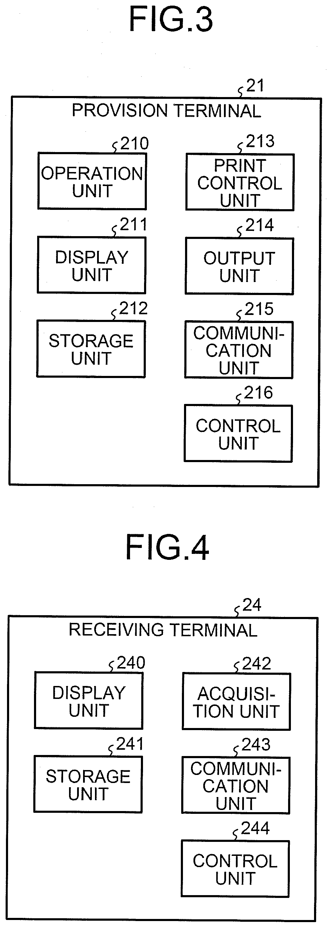

FIG. 3 is an example of a functional block diagram illustrating a function of the provision terminal 21 that can be applied to the first embodiment. The provision terminal 21 includes an operation unit 210, a display unit 211, a storage unit 212, a print control unit 213, an output unit 214, a communication unit 215, and a control unit 216.

The operation unit 210, the display unit 211, the storage unit 212, the print control unit 213, the output unit 214, the communication unit 215 and the control unit 216 are realized by a program operating on a CPU (Central Processing Unit) included in the provision terminal 21. A part or all of the operation unit 210, the display unit 211, the storage unit 212, the print control unit 213, the output unit 214, the communication unit 215, and the control unit 216 may also be configured by hardware that operates in cooperation with one another.

The control unit 216 in FIG. 3 controls the overall operation of the provision terminal 21. The operation unit 210 receives a user operation by processing a signal from an input device and passes information corresponding to the operation to the control unit 216. The display unit 211 causes the display device to display a screen according to a display control signal generated by the control unit 216. The storage unit 212 stores data in a storage such as a hard disk drive and a non-volatile semiconductor memory (flash memory) and/or a RAM (Random Access Memory) included in the provision terminal 21. The communication unit 215 performs communication through the network 11.

The print control unit 213 corresponds to the printer driver 22 to generate/output print data and convert the generated print data into image data. The output unit 214 outputs the identification image 23 under control of the control unit 216.

FIG. 4 is an example of a functional block diagram illustrating a function of the receiver terminal 24 according to the first embodiment. The receiver terminal 24 includes a display unit 240, a storage unit 241, an acquisition unit 242, a communication unit 243, and a control unit 244. The display unit 240, the storage unit 241, the acquisition unit 242, the communication unit 243, and the control unit 244 are realized by a program operating on a CPU included in the receiver terminal 24. A part or all of the display unit 240, the storage unit 241, the acquisition unit 242, the communication unit 243, and the control unit 244 may also be configured by hardware that operates in cooperation with one another.

The control unit 244 in FIG. 4 controls the entire receiver terminal 24. The display unit 240 causes the display device to display a screen according to a display control signal generated by the control unit 244. The storage unit 241 stores data in a storage such as a hard disk drive and a non-volatile semiconductor memory (flash memory) and/or a RAM (Random Access Memory) included in the receiver terminal 24. The communication unit 243 controls communication performed through the network 11.

The acquisition unit 242 acquires the device ID of the provision terminal 21 from the identification image 23 output by the provision terminal 21. The acquisition unit 242 controls an image capturing unit included in the receiver terminal 24 to image the identification image 23 displayed on the display device of the provision terminal 21, for example. The acquisition unit 242 then analyzes the identification image 23 being imaged and acquires the device ID included in the identification image 23.

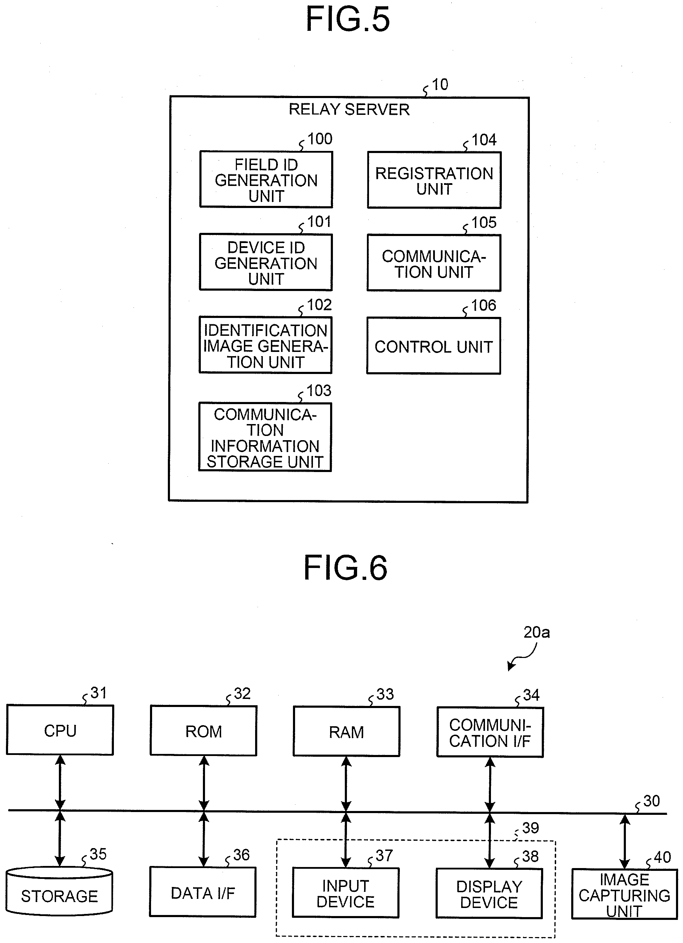

FIG. 5 is an example of a functional block diagram illustrating a function of the relay server 10 according to the first embodiment. The relay server 10 includes a field ID generation unit 100, a device ID generation unit 101, an identification image generation unit 102, a communication information storage unit 103, a registration unit 104, a communication unit 105, and a control unit 106. The field ID generation unit 100, the device ID generation unit 101, the identification image generation unit 102, the communication information storage unit 103, the registration unit 104, the communication unit 105, and the control unit 106 are realized by a program operating on a CPU included in the relay server 10. Apart or all of the field ID generation unit 100, the device ID generation unit 101, the identification image generation unit 102, the communication information storage unit 103, the registration unit 104, the communication unit 105, and the control unit 106 may also be configured by hardware that operates in cooperation with one another.

The control unit 106 in FIG. 5 controls the overall operation of the relay server 10. The communication unit 105 controls communication performed through the network 11.

The field ID generation unit 100 generates the field ID common to the provision terminal 21 and the receiver terminal 24 according to a request from the provision terminal 21 and the receiver terminal 24. The device ID generation unit 101 generates the device ID which identifies each of the provision terminal 21 and the receiver terminal 24 according to a request from the provision terminal 21 and the receiver terminal 24. The identification image generation unit 102 generates the identification image 23 according to a request from the provision terminal 21.

The registration unit 104 stores and registers the device ID of the provision terminal 21 and the receiver terminal 24 generated by the device ID generation unit 101 into a storage such as a hard disk drive. The registration unit 104 further registers a list in which the device ID of the provision terminal 21 is associated with the device ID of one or more of the receiver terminals 24.

The communication information storage unit 103 uses the storage such as the hard disk drive and the RAM included in the relay server 10 to temporarily store information, which is relevant to the communication procedure according to the DLNA performed by the provision terminal 21 and the receiver terminal 24, in association with the field ID.

FIG. 6 illustrates an example of a configuration that can be applied in common to each of the terminal devices 20a, 20b, 20c, and 20d according to the first embodiment. Note that for the purpose of description, the terminal device 20a is illustrated in FIG. 6 as a representative of the terminal devices 20a, 20b, 20c, and 20d that can be realized by a common configuration.

The terminal device 20a includes a CPU (Central Processing Unit) 31, a ROM (Read Only Memory) 32, a RAM (Random Access Memory) 33, a communication I/F 34, a storage 35, a data I/F 36, an input device 37, a display device 38, and an image capturing unit 40 which are connected to be able to communicate with one another through a bus 30. The storage 35 can be a hard disk drive or a non-volatile semiconductor memory (flash memory) and stores a program used for the CPU 31 to operate as well as various pieces of data.

The CPU 31 operates according to the program stored in advance in the ROM 32 or the storage 35 while using the RAM 33 as a work memory, and controls the overall operation of the terminal device 20a.

The communication I/F 34 performs communication through the network 11 by using a predetermined protocol (such as a TCP/IP (Transmission Control Protocol/Internet Protocol)). The data I/F 36 passes data to/from an external device. The data I/F 36 can be a USB (Universal Serial Bus) or an IEEE1394 (Institute of Electrical and Electronics Engineers 1394), for example. A wireless interface such as Bluetooth (Registered Trademark) may also be applied as the data I/F 36.

The input device 37 is an input device accepting a user operation and can be a keyboard or a pointing device which outputs a control signal according to a position, for example. The display device 38 includes a display device adopting an LCD (Liquid Crystal Display) and a drive circuit driving the display device, and displays a screen according to a display control signal generated by the CPU 31. Note that there may be used a so-called touch panel 39 in which the input device 37 and the display device 38 are integrated.

The image capturing unit 40 includes an image capturing element such as a CCD (Charge Coupled Device) image sensor or a CMOS (Complementary Metal Oxide Semiconductor) image sensor, an image capturing optical system which guides light from a subject to the image capturing element, a drive circuit which drives the image capturing element, and a signal processing unit which processes a signal output from the image capturing element and outputs the signal as digital image data. The image capturing unit 40 captures an image of a subject according to an instruction from the CPU 31 and outputs image data of the picked up image to the bus 30.

Note that the image capturing unit 40 can be omitted when the terminal device 20a is used as the provision terminal 21.

When the terminal device 20a is used as the provision terminal 21, for example, the operation unit 210, the display unit 211, the storage unit 212, the print control unit 213, the output unit 214, the communication unit 215 and the control unit 216 are realized by a communication program operating on the CPU 31. The communication program is provided while stored in the ROM 32 and/or the storage 35 in advance. It may also be configured to store the communication program on a computer connected to the network 11 so that the program is provided by downloading via the network 11 through the communication I/F 34. Moreover, it may be configured to provide or distribute the communication program via the network 11.

The communication program may also be provided while recorded in a computer-readable recording medium such as a CD (Compact Disk) or a DVD (Digital Versatile Disk) in a file having an installable or executable format. In this case, an information processing program recorded in the recording medium is supplied to the terminal device 20a through an external drive connected to the data I/F 36, for example. The communication program recorded in the recording medium may also be temporarily stored on another information processing device such as a personal computer and supplied from the other information processing device to the terminal device 20a by communication through the communication I/F 34 or the data I/F 36

The communication program has a module configuration including the aforementioned units (the operation unit 210, the display unit 211, the storage unit 212, the print control unit 213, the output unit 214, the communication unit 215, and the control unit 216), where the actual hardware is adapted such that each of the aforementioned units is loaded and generated on a main storage (such as the RAM 33) when the CPU 31 reads the communication program from the storage 35 or the ROM 32 and executes the program.

### (Brief description of DLNA)

Here, the communication procedure of the DLNA will be described briefly. The DLNA established primarily for application to a home network provides a codec with which a product should be compatible and the communication procedure employed when communication is performed between devices. A DTCP-IP (Digital Transmission Content Protection over Internet Protocol) is adopted in Ver. 1.5 as a copyright management technology to perform content protection.

The DLNA provides an applicable media format such as a video, a still picture, and a voice in order for the content to be communicated between devices. Moreover, the DLNA provides the capability of a device applicable to the DLNA in the form of classification called a device class (DeviceClass) . The DLNA further performs media (content) transfer on the basis of the HTTP and discovery (Discovery) of each device by using an SSDP (Simple Service Discovery Protocol) in a UPnP (Universal Plug & Play) . The SSDP performs a search using multicast HTTP on a UDP (User Datagram Protocol) (HTTPMU: HTTP Multicast over UDP) .

Classes defined as the device class in the category of a home network device (HMD) includes a digital media server (DMS), a digital media player (DMP), a digital media renderer (DMR), a digital media controller (DMC), and a digital media printer (DMPr) .

Classes defined in the category of a mobile handheld device (MHD) includes a mobile digital media server (M-DMS), a mobile digital media player (M-DMP), a mobile digital media controller (M-DMC), a mobile digital media uploader (M-DMU), and a mobile digital media downloader (M-DMD).

Moreover, classes defined in the category of a network infrastructure device (NID) includes a media interoperability unit (MIU) corresponding to the class under the home network device and a mobile network connectivity function (M-NCF) corresponding to the class under the mobile handheld device.

One can think that the first embodiment is adapted for the mobile digital media uploader class and the mobile digital media server class. The mobile digital media uploader class is adapted to transmit the content to the digital media server or the mobile digital media server. A device in this class includes a digital camera equipped with a wireless LAN function and a smartphone. Moreover, the mobile digital media server class is adapted to save and distribute the content to the digital media player and the digital media renderer connected to a network so that the content can be reproduced thereby, and is suited for a device which accumulates a content. A device in this class includes a PC and a hard disk drive connected to a network.

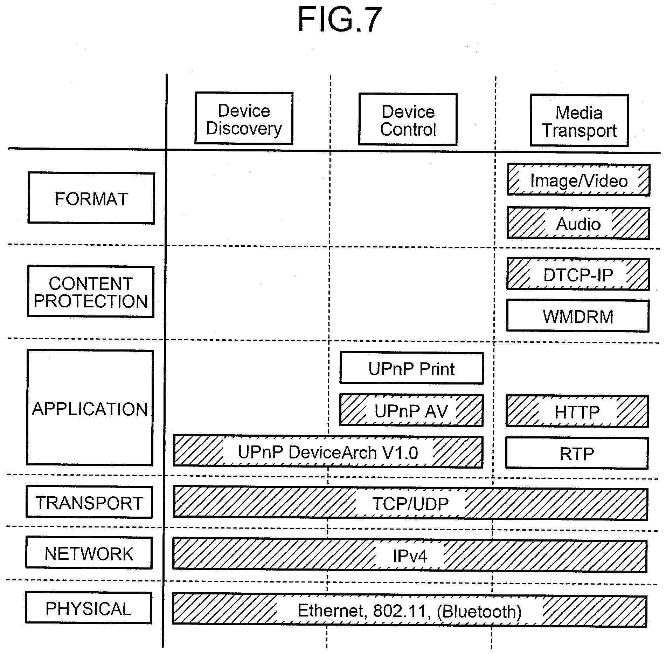

FIG. 7 illustrates a network architecture of the DLNA. As illustrated in FIG. 7, the network architecture of the DLNA is configured by layers including, from a lower layer, a physical layer, a network layer, a transport layer, an application layer, a content protection layer, and a format layer. Defined in each layer are sequences of device discovery (Device Discovery), device control (Device Control), and content transmission (Media Transport).

Ethernet (Registered Trademark) and IEEE801.11 are supported in the physical layer where Bluetooth can be used as an option. An IPv4 (Internet Protocol version 4) is supported in the network layer, while a TCP/UDP is supported in the transport layer.

In the application layer, a UPnP device architecture Ver. 1.0 is supported for device discovery and device control, and a UPnP AV which is the provision related to audio and video of the UPnP is supported for device control, for which a UPnP print that is the provision related to printing of the UPnP is supported as an option. Moreover, in the application layer, the HTTP is supported for media transport where an RTP (Real-time Transport Protocol) is supported as an option.

In the content protection layer, the DTCP-IP is supported for media transport where WMDRM (Registered Trademark: Windows Media Digital Rights Management) is supported as an option. In the format layer, a variety of formats are supported for video data, still picture data, and voice data.

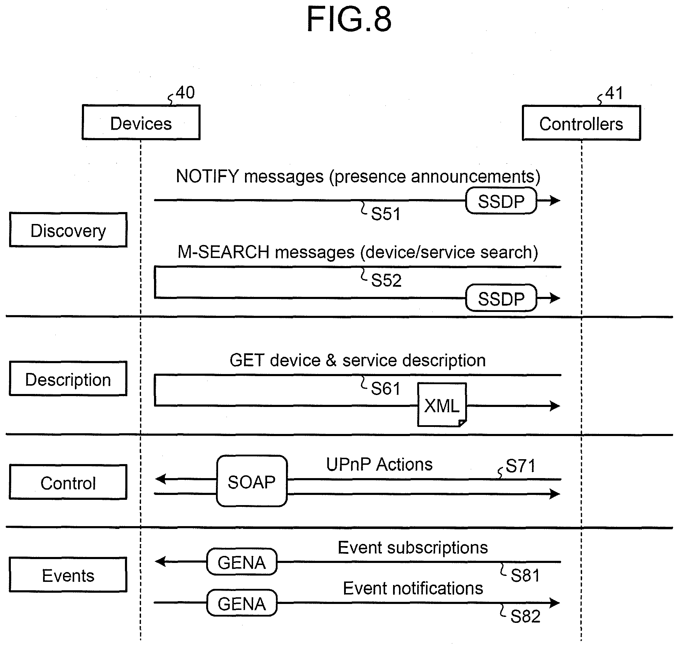

FIG. 8 schematically illustrates the communication procedure according to the DLNA. A device 41 (Controllers) in FIG. 8 is the one receiving the content, for example, and corresponds to the receiver terminal 24 in FIG. 2. A device 40 (Device) is the one providing the content, for example, and corresponds to the provision terminal 21 in FIG. 2.

The sequence of device discovery (Discovery) is executed first. In the device discovery sequence, the device 40 employs the SSDP to multicast a notify message (NOTIFY messages) (step S51) and announces the presence of the own device. The device 41 employs the SSDP to multicast an M-search message (M-SEARCH messages) and searches for a desired device (step S52).

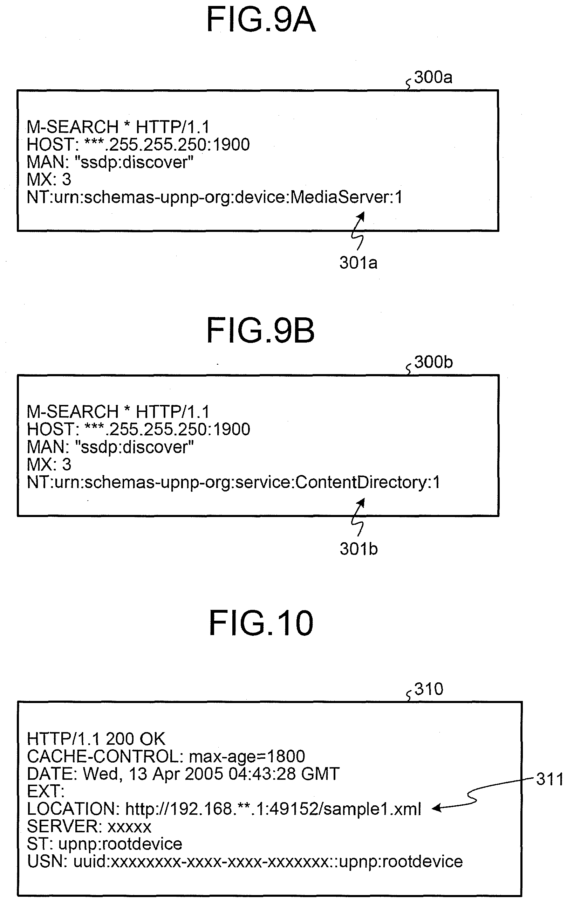

FIGS. 9A and 9B illustrate examples of the M-search message. FIG. 9A illustrates an example of an M-search message 300a used to search for a media server. In the M-search message 300a, the description of a portion 301a indicates that the media server is being searched for. FIG. 9B illustrates an example of an M-search message 300b used to search for a content directory according to the description of a portion 301b. FIG. 10 illustrates an example of a response to the M-search message. A response 310 illustrated in FIG. 10 includes information 311 of a URL in which the description of a device transmitting the response 310 is stored.

Next, the sequence of description (Description) is executed. In the description sequence, the device 41 acquires a description of the device according to the URL of the description included in the response to the M-search message being transmitted (step S61).

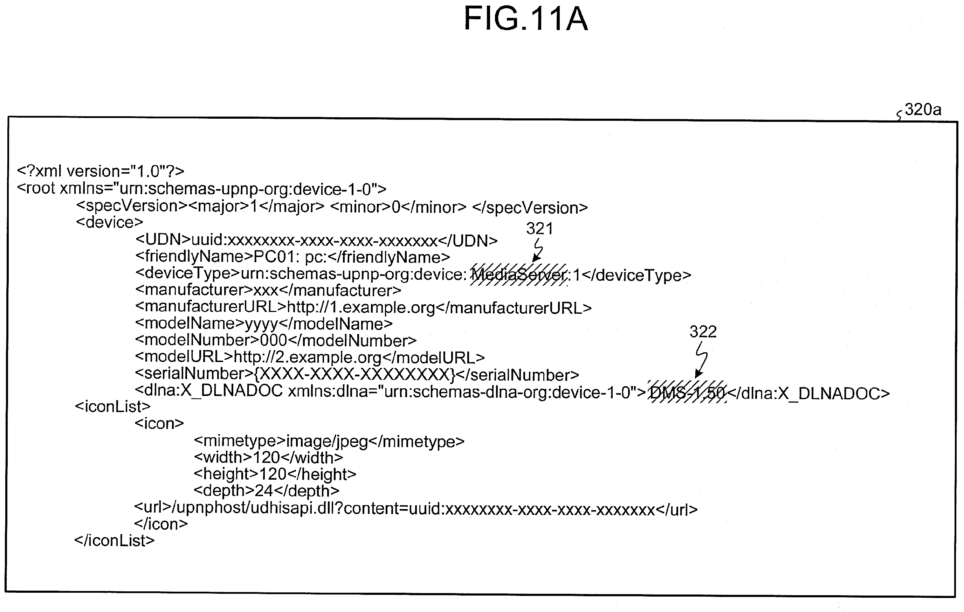

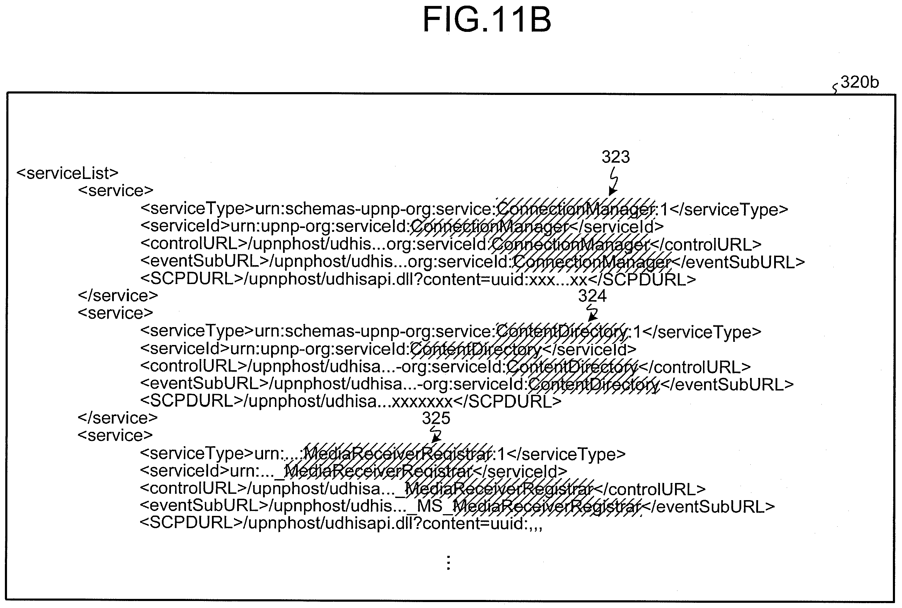

FIGS. 11A and 11B illustrate examples of the description. Descriptions 320a and 320b illustrated in FIGS. 11A and 11B are included in a single description, for example. The description is described in an XML (Extensible Markup Language) format as illustrated in FIGS. 11A and 11B, where tags "<>" and "</>" are used to describe each item and content while the description is structured by a nested structure of describing a tag within a tag.

In FIGS. 11A and 11B, the descriptions 320a and 320b include a device description described by a tag "<Device></Device>", an icon description described by a tag "<iconList></iconList>", and a service description described by a tag "<serviceList></serviceList>".

In the example illustrated in FIG. 11A, a description "MediaServer" in a hatched portion 321 indicates a definition of the UPnP AV, and a description "DMS-1.50" in a hatched portion 322 indicates a definition of the device class according to the DLNA. Moreover, as illustrated in FIG. 11B, a description "ConnectionManager" in a hatched portion 323 indicates a connection manager in the UPnP, and a description "ContentDirectory" in a hatched portion 324 indicates a content directory of the UPnP. A description "MediaReceiverRegistrar" in a hatched portion 325 is a definition unique to a vendor.

Referring back to FIG. 8, the sequence of control (Control) is executed upon completing the sequence of description (Description) . The device 41 refers to the service description included in the description acquired in step S61 and transmits an action request matching the device in the form of an SOAP message (step S71).

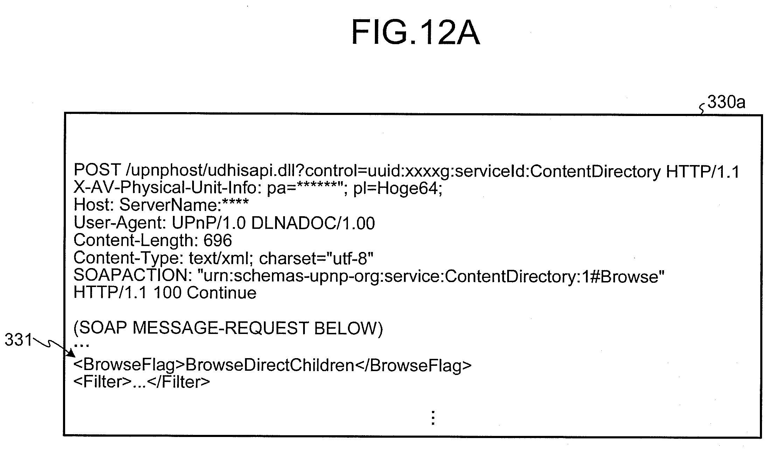

FIGS. 12A to 12C illustrate examples of the SOAP message transmitted in this step. FIG. 12A illustrates an example of the SOAP message corresponding to a browsing request of the content. As illustrated in FIG. 12A, the browsing request of the content in the form of the SOAP message is described in a portion 331 within a message 330a. In this example, the description in the portion 331 includes flag information for browsing and a filter criterion.

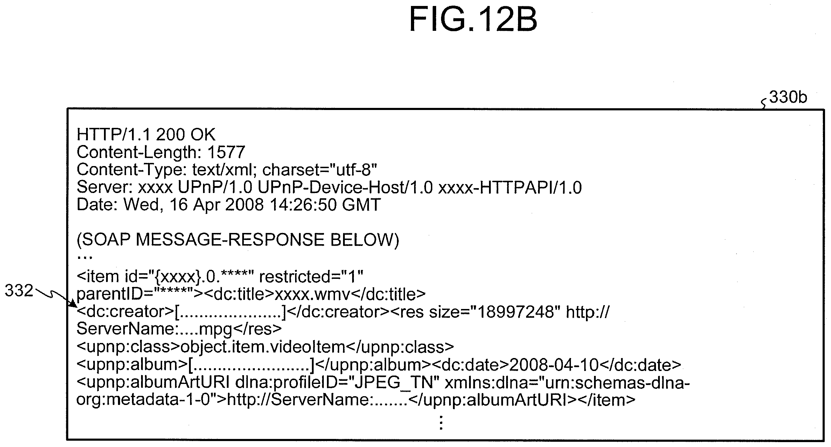

FIG. 12B illustrates an example of the SOAP message corresponding to a response to the message 330a. As illustrated in FIG. 12B, a response to the browsing request in the form of the SOAP message is described in a portion 332 within a message 330b. In this example, the description in the portion 332 includes detailed information of the description in the aforementioned portion 331.

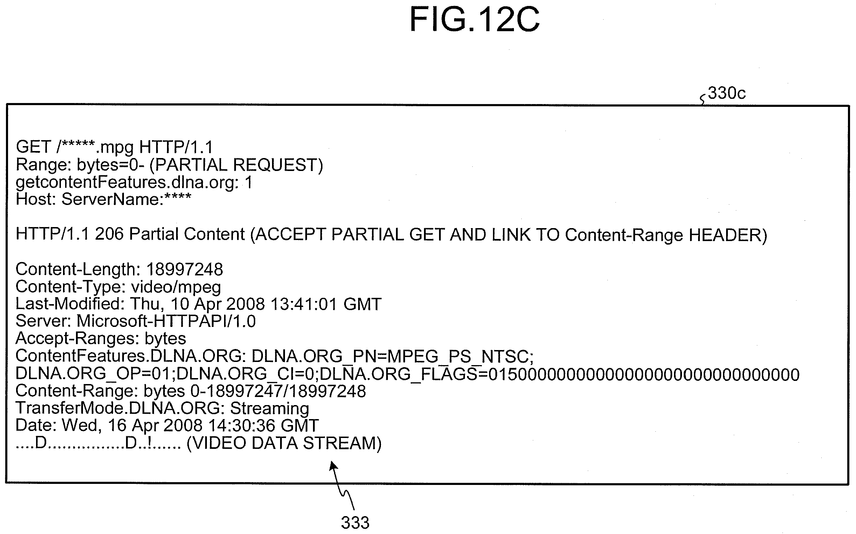

FIG. 12C illustrates an example of the SOAP message transmitted when the device 41 acquires the content as a result of the aforementioned messages 330a and 330b. As illustrated in FIG. 12C, the body of a video stream that is the content is described in a portion 333 within a message 330c. In this case, the video stream is not capsuled by the SOAP, whereby the device 41 acquires the content by GET of the HTTP.

Referring back to FIG. 8, the sequence of event (Events) is executed upon completing the sequence of control (Control) . The event sequence is a sequence of monitoring a state of the device and uses a GENA (General Events Notification Architecture) protocol. The device 41 transmits a registration request (Event Subscription) to the device 40 (step S81). Once receiving the registration request, the device 40 transmits a notification (Event Notifications) regarding a change in state to the device 41, from which the registration request is transmitted, when the state of the own device 40 changes (step S82).

### (Communication processing according to first embodiment)

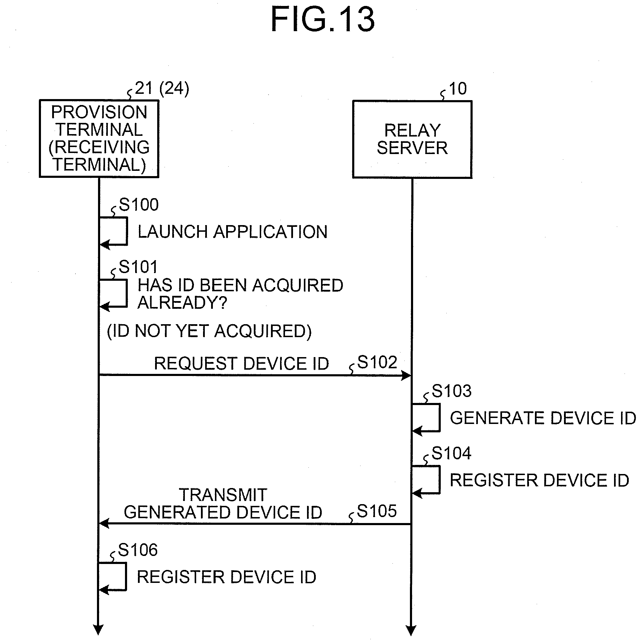

Next, communication processing according to the first embodiment will be described with reference to FIGS. 13 to 18. Note that the communication processing described below is executed by communication application software (hereinafter abbreviated as a communication application) according to the first embodiment that is installed to the provision terminal 21 and the receiver terminal 24.

The communication application in the provision terminal 21 includes a function of a part or all of the operation unit 210, the display unit 211, the storage unit 212, the print control unit 213, the output unit 214, the communication unit 215, and the control unit 216 that are described above. Likewise, the communication application in the receiver terminal 24 includes a function of a part or all of the display unit 240, the storage unit 241, the acquisition unit 242, the communication unit 243, and the control unit 244 that are described above. The communication application may also include each function of the provision terminal 21 and each function of the receiver terminal 24 in common.

FIG. 13 illustrates an example of registration processing of identification information of the provision terminal 21 and the receiver terminal 24 according to the first embodiment. Note that the processing illustrated in FIG. 13 that is common to both the provision terminal 21 and the receiver terminal 24 will be described as the processing pertaining to the provision terminal 21.

In step S100, the provision terminal 21 launches the communication application according to the first embodiment as illustrated in FIG. 13. In step S101, the control unit 216 of the provision terminal 21 refers to the storage unit 212 or the like and determines whether or not a device ID that is the identification information identifying the own terminal has already been acquired. When determining that the device ID has already been acquired, the control unit 216 ends the series of processings illustrated in FIG. 13.

When determining in step S101 that the device ID of the own terminal has not yet been acquired, the control unit 216 requests the device ID from the relay server 10 (step S102). In response to the request, the device ID generation unit 101 of the relay server 10 generates the device ID (step S103) so that the registration unit 104 registers the generated device ID (step S104). The relay server 10 then transmits the registered device ID to the provision terminal 21 (step S105) .

On the provision terminal 21, the control unit 216 causes the storage unit 212 to store the device ID that is generated and transmitted by the relay server 10 in response to the request, and registers the device ID (step S106). This device ID is used perpetually by the communication application on the provision terminal 21 and is held in the storage unit 212 when the communication application is ended or when the provision terminal 21 is turned off, for example.

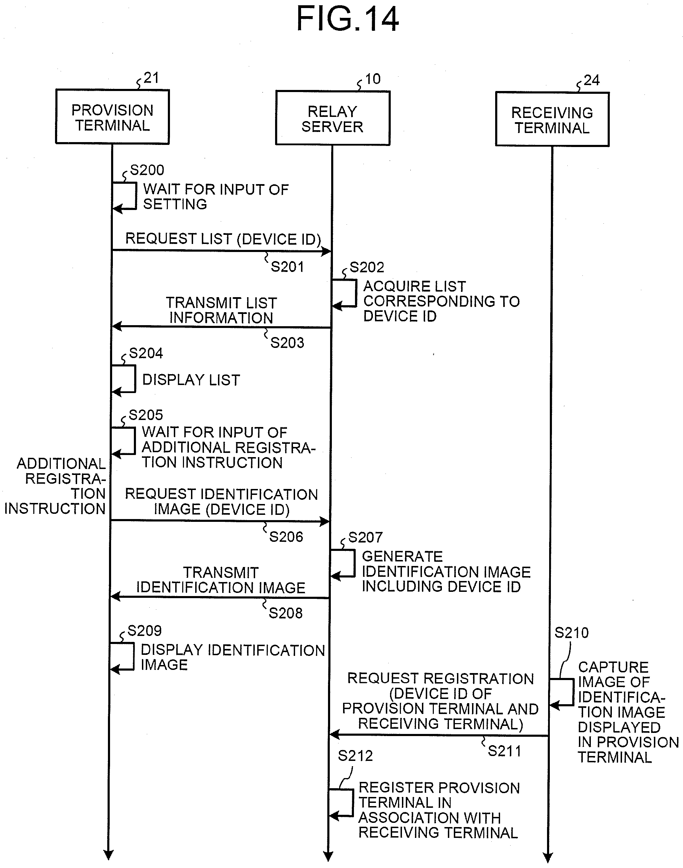

FIG. 14 illustrates an example of association processing between the provision terminal 21 and the receiver terminal 24 according to the first embodiment. The processing illustrated in FIG. 14 enables the provision terminal 21 to specify the receiver terminal 24 to which the content is transmitted.

On the provision terminal 21, the control unit 216 waits for an input of setting to start the association processing (step S200). When determining that the setting is input by a user operation on the operation unit 210, for example, the control unit 216 requests from the relay server 10 a list of the receiver terminals 24 that are already associated with the provision terminal 21 (step S201) . In response to the request, the control unit 106 of the relay server 10 acquires the list registered in the registration unit 104 (step S202) . The relay server 10 then transmits the acquired list to the provision terminal 21 (step S203).

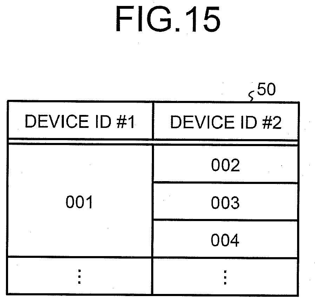

FIG. 15 illustrates an example of the list registered in the relay server 10 according to the first embodiment. As illustrated in FIG. 15, a single device ID #1 corresponding to the provision terminal 21 is registered in association with a plurality of device IDs #2 corresponding to the receiver terminals 24 in a list 50.

The control unit 216 of the provision terminal 21 causes the display unit 211 to display the list 50 transmitted from the relay server 10 as a list screen on the display device 38 (step S204). The control unit 216 waits for an input of an instruction to register another receiver terminal 24 as an addition to each of the receiver terminals 24 displayed on the list screen (step S205).

When the input to instruct additional registration is performed on the operation unit 210, the control unit 216 transmits the device ID to the relay server 10 and requests the identification image 23 corresponding to the device ID (step S206). In response to the request, the identification image generation unit 102 of the relay server 10 generates the identification image 23 which is an image formed by encoding the device ID (step S207). The relay server 10 then transmits the generated identification image 23 to the provision terminal 21 (step S208).

Note that the identification image 23 may instead be generated on the provision terminal 21.

The control unit 216 of the provision terminal 21 causes the display unit 211 to display the identification image 23 transmitted from the relay server 10 on the display device 38 (step S209).

On the receiver terminal 24, the identification image 23 displayed on the display device 38 of the provision terminal 21 is imaged by the image capturing unit 40 according to a user operation, whereby an image including the identification image 23 is acquired. The acquisition unit 242 of the receiver terminal 24 extracts and decodes the identification image 23 from the image including the identification image 23, and acquires the device ID of the provision terminal 21 (step S210) .

The control unit 244 of the receiver terminal 24 transmits, to the relay server 10, the own device ID acquired by the processing in FIG. 13 and stored in the storage unit 241 or the like as well as the device ID of the provision terminal 21 acquired from the identification image 23, and requests the relay server 10 to register these device IDs in association with each other (step S211).

In response to the request, the control unit 106 of the relay server 10 additionally registers in the list 50 the device ID of the provision terminal 21 in association with the device ID of the receiver terminal 24 (step S212). When the device ID of the provision terminal 21 included in the request from the receiver terminal 24 is already registered in the list 50, the control unit 106 registers the device ID of the receiver terminal 24 in association with the device ID of the provision terminal 24 that is already registered in the list 50.

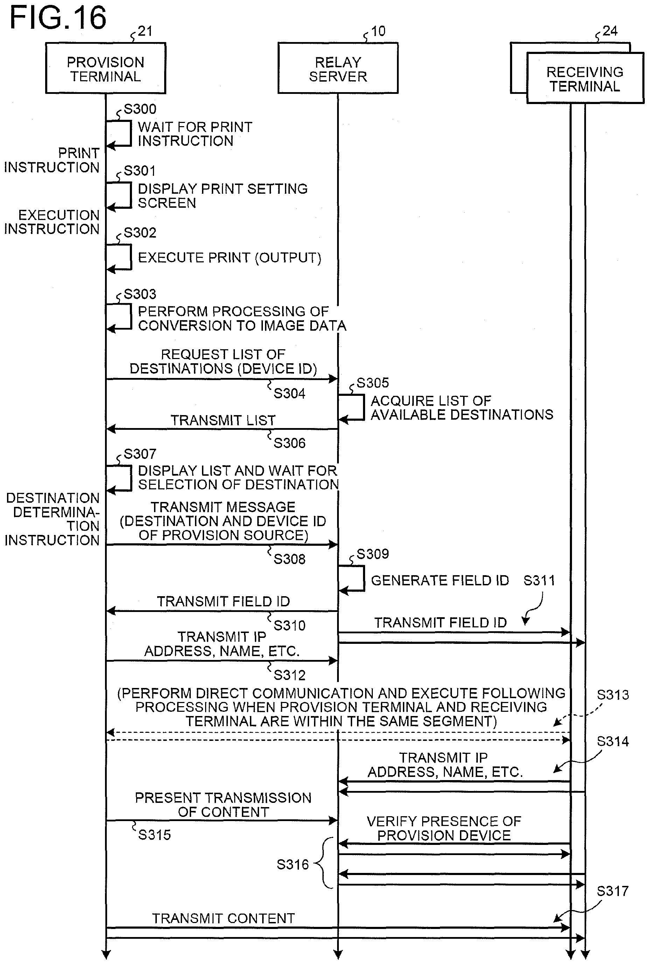

FIG. 16 illustrates an example of processing which transmits the content from the provision terminal 21 to the receiver terminal 24 registered in the list 50 by the registration processing illustrated in FIG. 14 according to the first embodiment. In the first embodiment, the transmission of the content from the provision terminal 21 is executed by the printer driver 22 installed in the provision terminal 21. The control unit 216 of the provision terminal 21 waits for a user operation performed to give a print instruction in step S300. When the operation unit 210 accepts the user operation of the print instruction, the control unit 216 causes the display unit 211 to display a print setting screen on the display device 38 in step S301.

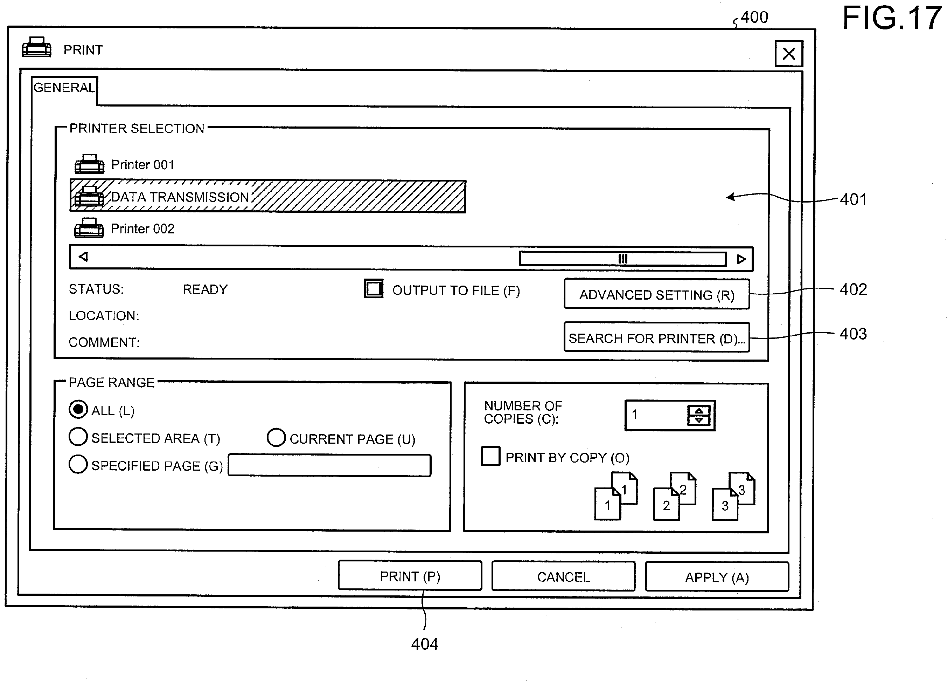

FIG. 17 illustrates an example of the print setting screen displayed on the display device 38 according to the first embodiment. As illustrated in FIG. 17, a print setting screen 400 includes a printer selection part 401, an advanced setting button 402, a printer search button 403, and a print execution button 404.

The printer selection part 401 displays a list of destinations which can be selected by the provision terminal 21 and to which the print data is output. In the printer driver 22, one can select as the destination of the print data a printer device ("Printer001" and "Printer002" in the example illustrated in FIG. 17) as hardware and also "data transmission" by which the print data is transmitted upon conversion into image data.

The advanced setting button 402 displays an advanced setting screen on which one performs advanced setting related to the destination of the print data selected in the printer selection part 401. When the "data transmission" is selected as the destination of the print data in the printer selection part 401, one can set on the advanced setting screen an option (such as a format of the image data, resolution, number of colors, data size after conversion, and a file name of the image data) when converting the print data into the image data, for example.

The printer search button 403 searches for a destination to which the print data is output. When the "data transmission" is selected as the destination of the print data, there is for example displayed from the list 50 registered in the relay server 10 in step S212 of FIG. 14 a list screen on which the receiver terminal 24 associated with the device ID of the provision terminal 21 is displayed as a list.

The print execution button 404 starts output of the print data. When the printer device as hardware is selected in the printer selection part 401, for example, the print data is transferred to the selected printer device by operating the print execution button 404. When the "data transmission" is selected in the printer selection part 401, the print data is converted into the image data by operating the print execution button 404. Then, there is started the communication procedure of transmitting the image data to the receiver terminal 24 that is selected by the operation of the printer search button 403.

Referring back to FIG. 16, it is assumed that the "data transmission" is selected in the printer selection part 401 on the print setting screen 400. It is further assumed that the printer search button 403 is not operated at this stage and that the destination (transmission destination) of the print data is not set. When the operation unit 210 accepts a user operation against the print execution button 404, the control unit 216 starts executing output processing of the print data (step S302) and converts the print data into the image data (step S303) .

The control unit 216 further transmits the device ID of the provision terminal 21 to the relay server 10 and requests a list to select a destination to which the content is provided (step S304). In response to the request, the control unit 106 of the relay server 10 extracts the device ID of the receiving terminal 24 associated with the device ID of the provision terminal 21 from the list 50 registered in the registration unit 104 (step S305). The control unit 106 transmits to the provision terminal 21 the list of the device ID of the receiving terminal 24 extracted from the list 50 (step S306).

The provision terminal 21 causes the display unit 211 to display, on the display device 38, the list of the device ID of the receiving terminal 24 associated with the device ID of the provision terminal 21, the list being transmitted from the relay server 10 (step S307).

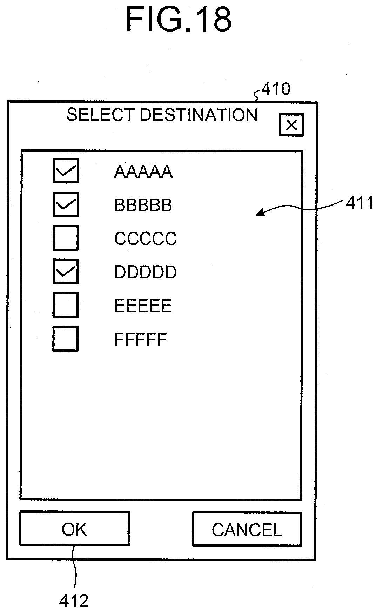

FIG. 18 illustrates an example of the list screen of the receiving terminal 24 according to the first embodiment. As illustrated in FIG. 18, a list screen 410 includes a list display part 411 and an execution button 412. The list display part 411 displays a list of the device ID of the receiving terminal 24 associated with the provision terminal 21. The user operates the input device 37 to select the device ID of the receiving terminal 24 to which the content is transmitted, from the list of the device ID displayed on the list display part 411. In the example illustrated in FIG. 18, the device ID is selected when a corresponding check box displayed at the front of each device ID in the list is checked by a user operation. The execution button 412 confirms the selection of the device ID selected in the list display part 411.

Note that while FIG. 18 illustrates the example where the list display part 411 displays the list of the device ID, the present embodiment is not limited to this example. It is preferred, for example, that the list display part 411 displays a name (such as a model name) of the receiving terminal 24 corresponding to the device ID instead of the device ID so that the user can easily identify the receiving terminal 24. When the provision terminal 21 or the receiving terminal 24 requests the device ID from the relay server 10 in step S102 illustrated in FIG. 13, for example, the name of the own terminal may be attached to the request. The relay server 10 registers the device ID generated in response to the request in association with the name attached to the request.

Referring back to FIG. 16, the control unit 216 of the provision terminal 21 waits for the user operation on the list screen 410 and, once the operation unit 210 accepts an operation on the execution button 412, transmits to the relay server 10 a message including the device ID of each of the content provider and the destination to which the content is transmitted (step S308). In other words, in step S308, the control unit 216 transmits to the relay server 10 the device ID of the provision terminal 21 and the device ID of each receiving terminal 24 selected in the list display part 411 and requests the content to be transmitted to each receiving terminal 24.

The control unit 106 of the relay server 10 generates the field ID with the field ID generation unit 100 and stores the ID in the communication information storage unit 103, for example (step S309). The control unit 106 further transmits the generated field ID to the provision terminal 21 and each receiving terminal 24 on the basis of each device ID transmitted from the provision terminal 21 (steps S310 and S311). The provision terminal 21 and each receiving terminal 24 use this field ID from here on to execute the communication procedure according to the DLNA through the relay server 10.

Upon receiving the field ID, the provision terminal 21 and the receiving terminal 24 start the communication procedure according to the DLNA that is described with reference to FIG. 8. The control unit 216 of the provision terminal 21 transmits the IP address, name, and directory information of the own terminal to the relay server 10 (step S312). Likewise, each receiving terminal 24 transmits the IP address, name, and directory information of the own terminal to the relay server 10 (step S314).

The provision terminal 21 also multicasts a notify message to the network 11. Likewise, the receiving terminal 24 multicasts an M-search message to the network 11. These messages are successfully exchanged by multicasting when the provision terminal 21 and the receiving terminal 24 are within the same segment, in which case a normal communication procedure according to the DLNA is executed (step S313).

When the provision terminal 21 and the receiving terminal 24 are not in the same segment, on the other hand, the messages are not successfully exchanged by multicasting. As a result, the provision terminal 21 and the receiving terminal 24 cannot receive a response to the messages these terminals transmit by multicasting.

In this case, the provision terminal 21 and the receiving terminal 24 use the field ID to execute the communication procedure according to the DLNA with the relay server 10 (steps S315 and S316). In other words, the provision terminal 21 executes the communication procedure according to the DLNA while treating the relay server 10 as the receiving terminal 24. Likewise, each receiving terminal 24 executes the communication procedure according to the DLNA while treating the relay server 10 as the provision terminal 21.

The relay server 10 temporarily stores, in the communication information storage unit 103, each message according to the communication procedure of the DLNA that is transmitted from the provision terminal 21 and the receiving terminal 24 in association with the field ID, for example. The relay server 10 then transmits a response to each message stored in association with the field ID to the terminal from which the message is transmitted. As a result, the communication procedure according to the DLNA can be executed between the provision terminal 21 and the receiving terminal 24 through the relay server 10.

In the example illustrated in FIG. 16, the provision terminal 21 transmits to the relay server 10 the notify message, indicating that the content is transmitted, while adding the field ID to the message (step S315) . The relay server 10 stores the notify message in association with the field ID into the communication information storage unit 103. Moreover, the receiving terminal 24 transmits to the relay server 10 the M-search message, which verifies the presence of the provision terminal 21 transmitting the content, while adding the field ID to the message (step S316) . The relay server 10 stores the M-search message in association with the field ID into the communication information storage unit 103. The relay server 10 refers to each message stored in association with the field ID and returns a corresponding message to each of the provision terminal 21 and the receiving terminal 24.

This communication according to the communication procedure of the DLNA is performed against the relay server 10 that is constructed on a network cloud, whereby each message is wrapped by the HTTP to be transmitted/received. Each message is thus transmitted/received between the relay server 10 and each of the provision terminal 21 and the receiving terminal 24 across segments.

Once the communication procedure according to the DLNA performed in step S313 or steps S315 and S316 is completed, the provision terminal 21 transmits the content to the receiving terminal 24 (step S317).

According to the first embodiment, the content in the form of the image data that is formed by converting the print data can be transmitted between the provision terminal 21 and the receiving terminal 24 belonging to the different segments #1 and #2, respectively, according to the communication procedure of the DLNA. As a result, the convenience in transmitting the print data in the form of the image data can be improved.

### (Second example)

Next, a second example will be described. In the first embodiment described above, the provision terminal 21 presents the own device ID to the receiving terminal 24 by encoding the ID into the identification image such the QR code (Registered Trademark), but the present invention is not limited to this example. In the second example, the provision terminal 21 transmits a device ID of the provision terminal 21 to the receiving terminal 24 through near field communication.

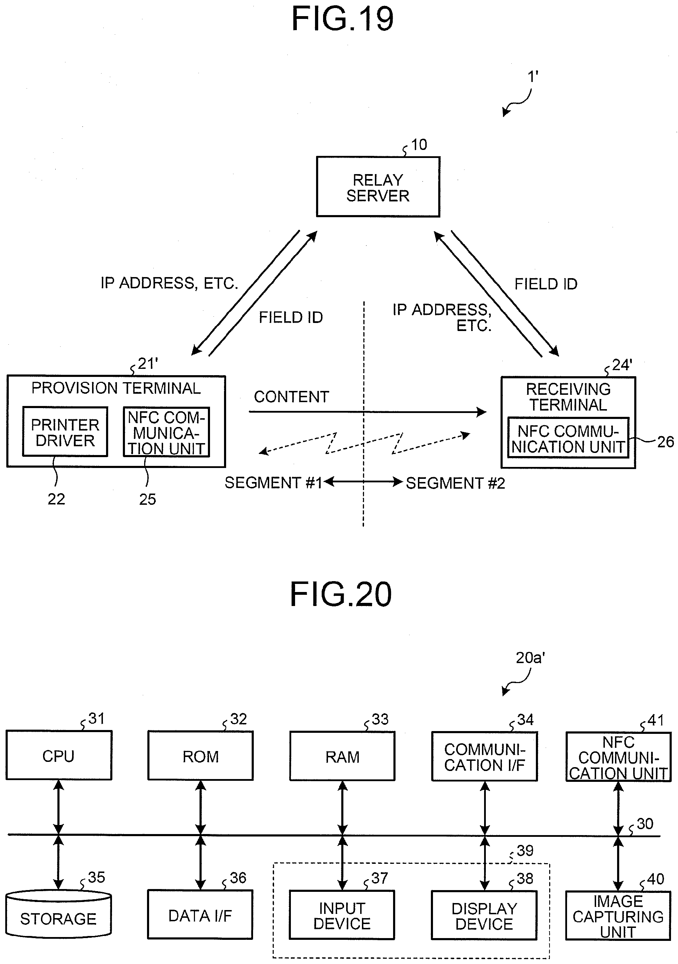

FIG. 19 schematically illustrates an information sharing system according to the second example. Note that a part common to both FIGS. 2 and 19 is assigned the identical reference numeral and will not be described in detail in FIG. 19.

As illustrated in FIG. 19, an information sharing system 1' according to the second example includes a relay server 10, a provision terminal 21', and a receiving terminal 24'. Here, the provision terminal 21' and the receiving terminal 24' include NFC (Near field communication) communication units 25 and 26, respectively, to perform the near field communication with each other. The NFC communication units 25 and 26 are adapted to be able to perform communication with each other when brought to a short distance of approximately several centimeters to one meter away from each other.

FIG. 20 illustrates an example of a configuration of a terminal device 20a' that can be applied to the information sharing system 1' according to the second example. Note that a part common to both FIGS. 6 and 20 is assigned the identical reference numeral and will not be described in detail in FIG. 20.

As illustrated in FIG. 20, the terminal device 20a' applicable to the second example has a configuration where an NFC communication unit 41 is added to the configuration of the terminal device 20a according to the first embodiment. The NFC communication unit 41 can transmit data by reading it from a storage 35, a RAM 33, a ROM 32 and the like according to control of a CPU 31. The NFC communication unit 41 can further decode a signal received by corresponding near field communication to a piece of data to be transmitted to the CPU 31.

It is assumed in this configuration that the provision terminal 21 and the receiving terminal 24 are at a close distance from each other to be able to perform the near field communication. In this case, the provision terminal 21 omits the processing performed in each of steps S206 to S208 illustrated in FIG. 14 and performs processing of transmitting the own device ID through the NFC communication unit 41 instead of performing the processing in step S209. Instead of performing the processing in step S210, the receiving terminal 24 uses the NFC communication unit 41 included therein to receive the device ID transmitted from the provision terminal 21 via the near field communication and stores the device ID.

Therefore, the communication processing similar to that performed when the identification image 23 is imaged as described above can be performed when the device ID is shared between the provision terminal 21 and the receiving terminal 24 through the near field communication. Moreover, similar to the capturing of the image of the identification image 23, the security can be assured in the near field communication which is established only after the provision terminal 21 and the receiving terminal 24 are placed at a distance where the terminals are visible from each other.

According to a first aspect, an information sharing system includes an information processing system which includes one or more information processing devices, and first and second terminal devices which cannot perform communication with each other across segments. The first terminal device includes: a storage unit which stores first terminal identification information used to identify the own terminal device; a list request unit which requests, from the information processing system, a list including one or more pieces of second terminal identification information associated with the first terminal identification information and used to identify the respective one or more second terminal devices; and a content transmission unit which transmits, to the information processing system, a content transmission request to transmit a content to the second terminal device which is selected from the list. The second terminal devices each includes: an acquisition unit which acquires the first terminal identification information from the storage unit by using near field communication; and a registration request unit which makes a registration request to the information processing system to register the first terminal identification information acquired by the acquisition unit and the second terminal identification information used to identify the own terminal in association with each other. The information processing system includes: a registration unit which registers the first terminal identification information and the one or more pieces of the second terminal identification information in association with each other in response to the registration request; a list transmission unit which, in response to the request from the list request unit, transmits to the first terminal device a list including the one or more pieces of the second terminal identification information registered in association with the first terminal identification information in the registration unit; and a common identification information generation unit which generates common identification information in response to the content transmission request and transmits the common identification information to the first terminal device and the second terminal device. The first terminal device, with the content transmission unit, executes a procedure of transmitting the content with the selected second terminal device through the information processing system by using the common identification information.

According to a second aspect, in the information sharing system according to the first aspect, the terminal device performs multicasting and, when there is no response, transmits the content through the information processing system.

According a third aspect, a terminal device includes: a registration request unit which transmits, to an information processing system, a registration request to register first terminal identification information used to identify own terminal device and second terminal identification information that is acquired from other terminal device by using near field communication and identifies the other terminal device in association with each other; a list request unit which requests, from the information processing system, a list including one or more pieces of the second terminal identification information associated with the first terminal identification information; and a content transmission unit which transmits, to the information processing system, a content transmission request to transmit a content to a terminal device selected from the list. The content transmission unit executes a procedure of transmitting the content with the selected terminal device through the information processing system using common identification information generated to be shared with the selected terminal device by the information processing system.

According to a fourth aspect, in the terminal device according to the third aspect, the content transmission unit performs multicasting and, when there is no response, transmits the content through the information processing system.

An embodiment can achieve the effect that the convenience in distributing data is further improved.

The present invention can be implemented in any convenient form, for example using dedicated hardware, or a mixture of dedicated hardware and software. The present invention may be implemented as computer software implemented by one or more network processing apparatus. The network can comprise any conventional terrestrial or wireless communications network, such as the Internet. The processing apparatus can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implemental on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory.

Although the invention has been described with respect to specific embodiments for a complete and clear disclosure, the invention is not to be thus limited but is to be construed as embodying all modifications and alternative constructions that may occur to one skilled in the art that fairly fall within the basic teaching herein set forth, within the scope of the claims.

## Claims

1. A first terminal device (21) comprising:
an output unit (214) configured to output a terminal identification image (23) including first terminal identification information to be captured by one or more second terminal devices (24) to identify the first terminal device (21);
a control unit (216) configured to:
request, from an information processing system (10), a list of second terminal identification information associated with the first terminal identification information and used to identify the second terminal devices (24), thereby acquiring, from a registration unit (104) of an external information processing system (10), a list of second terminal devices that have captured the terminal identification image and acquired the included first terminal identification information, and
execute processing of transmitting, to the information processing system (10), a content transmission request to allow the first terminal device (21) to transmit data to a second terminal device selected from the list of second terminal devices that have acquired the first terminal identification information; and
a display unit (211) configured to display the list of second terminal devices (24) that have acquired the first terminal identification information,
whereby a control unit (244) of the second terminal device (24) is configured to transmit, to the information processing system (10), a registration request to register the first terminal identification information used to identify the first terminal device (21) and the second terminal identification information, used to identify the second terminal device (24) itself, in association with each other.

2. A first terminal device (21) according to claim 1, wherein the control unit (216) is configured to execute a procedure of transmitting the data to the selected second terminal device (24) through the information processing system (10) using common identification information generated to be shared with the selected second terminal device (24) by the information processing system (10).

3. A first terminal device (21) according to claim 1 or 2, further comprising:
a print control unit (213) configured to control output of print data;
the display unit (211) configured to display an operation screen on which a user operation is performed to operate the print control unit (213),
wherein the control unit (216) is configured to request, from the information processing system (10), the list in response to user operation on the operation screen displayed on the display unit, and to cause the display unit (211) to display a screen on which a second terminal device (24), to which the data is to be transmitted, is selected on the basis of terminal identification information included in the list transmitted from the information processing system in response to the request.

4. An information sharing system comprising a first terminal device (21) according to any one of claims 1 to 3, one or more second terminal devices (24) and the information processing system (10) including one or more information processing devices,
wherein each of the second terminal devices (24) comprises:
an acquisition unit (242) configured to capture the terminal identification image (23) and to acquire the included first terminal identification information;
a reception unit (243) configured to receive the data transmitted by the control unit (216);
a control unit (244) configured to make a registration request to the information processing system (10) to register the first terminal identification information acquired by the acquisition unit and second terminal identification information used to identify its own terminal device in association with each other,
wherein the information processing system (10) includes:
the registration unit (104) configured to register the first terminal identification information and the second terminal identification information in association with each other in response to the registration request; and
a list transmission unit (105) configured to transmit, to the first terminal device (21), the list including the second terminal identification information registered in association with the first terminal identification information in the registration unit (104), in response to a request from the control unit (216) of the first terminal device (21).

5. An information sharing system according to claim 4, wherein the control unit (216) of the first terminal device (21) is configured to execute a procedure of transmitting the data to the selected second terminal device (24) through the information processing system (10) using common identification information generated to be shared with the selected second terminal device (24) by the information processing system.

6. An information sharing system according to claim 5, wherein the first terminal device (21) and the second terminal devices (24) cannot perform communication with each other across segments.

7. An information sharing system according to claim 4, 5 or 6, wherein
the first terminal device (21) further comprises:
a print control unit (213) configured to control output of print data; and
the display unit (211) is configured to display an operation screen on which a user operation is performed to operate the print control unit (213), and
the control unit (216) of the first terminal device is configured to request, from the information processing system (10), the list in response to user operation on the operation screen displayed on the display unit, and to cause the display unit to display a screen on which a second terminal device, to which the data is to be transmitted, is selected on the basis of terminal identification information included in the list transmitted from the information processing system in response to the request.

8. An information sharing method in an information sharing system including a first terminal device (21), one or more second terminal devices (24) and an information processing system (10) which includes one or more information processing devices, the method comprising:
outputting, by the first terminal device (21), a first terminal identification image (23) including first terminal identification information to be captured by the second terminal devices (24) to identify the first terminal device (21) ;
capturing, by the second terminal devices (24), the first terminal identification image (23);
acquiring, by each of the second terminal devices (24), the first terminal identification information from the terminal identification image (23);
making, by each of the second terminal devices (24), a registration request to the information processing system (10) to register the acquired first terminal identification information and second terminal identification information, used to identify itself, in association with each other;
registering, by the information processing system (10), the first terminal identification information and the second terminal identification information in association with each other, in response to the registration request;
requesting, by the first terminal device (21), from the information processing system (10), a list including the second terminal identification information associated with the first terminal identification information and used to identify the respective second terminal devices (24);
transmitting, by the information processing system (10), to the first terminal device (21), in response to the requesting of the list, the list including the second terminal identification information registered in association with the first terminal identification information in a registration unit (104) of the information processing system (10);
displaying, by the first terminal device (21), a list of the second terminal devices (24) that have acquired the first terminal identification information;
transmitting, by the first terminal device (21), data to one of the second terminal devices (24) selected from the displayed list; and
receiving, by the selected second terminal device (24), the data.

9. An information sharing method according to claim 8, wherein the first terminal device (21) executes a procedure of transmitting the data together with the selected second terminal device (24) through the information processing system (10) using common identification information generated to be shared with the selected second terminal device (24) by the information processing system (10).

10. An information sharing method according to claim 9, wherein the first terminal device (21) and the second terminal devices (24) cannot perform communication with each other across segments.

11. An information sharing method according to claim 8, 9 or 10, further comprising: displaying, by the first terminal device (21), an operation screen on which a user operation against a print control unit which controls output of print data is performed, wherein
at the requesting of the list, the first terminal device (21) requests the list from the information processing system (10) in response to user operation on the operation screen, and displays a screen on which a terminal device, to which the data is to be transmitted, is selected on the basis of terminal identification information included in the list transmitted from the information processing system (10) in response to the requesting of the list.

## Patentansprüche

1. Erstes Endgerät (21) umfassend:
eine Ausgabeeinheit (214), die konfiguriert ist, um ein Endidentifizierungsbild (23) auszugeben, das erste Endidentifizierungsinformationen beinhaltet, die von einem oder mehreren zweiten Endgeräten (24) erfasst werden sollen, um das erste Endgerät (21) zu identifizieren;
eine Steuereinheit (216), die konfiguriert ist, um:
von einem Informationsverarbeitungssystem (10) eine Liste von zweiten Endidentifizierungsinformationen anzufordern, die den ersten Endidentifizierungsinformationen zugeordnet sind und die verwendet werden, um die zweiten Endgeräte (24) zu identifizieren, wodurch, von einer Registrierungseinheit (104) eines externen Informationsverarbeitungssystems (10), eine Liste von zweiten Endgeräten erlangt wird, die das Endidentifizierungsbild erfasst haben und die beinhalteten ersten Endidentifizierungsinformationen erlangt haben, und
Verarbeitung zum Übertragen, an das Informationsverarbeitungssystem (10), einer Inhaltsübertragungsanforderung auszuführen, um dem ersten Endgerät (21) zu ermöglichen, Daten an ein zweites Endgerät zu übertragen, das aus der Liste der zweiten Endgeräte ausgewählt wird, die die ersten Endidentifizierungsinformationen erlangt haben; und
eine Anzeigeeinheit (211), die konfiguriert ist, um die Liste der zweiten Endgeräte (24) anzuzeigen, die die ersten Endidentifizierungsinformationen erlangt haben,
wodurch eine Steuereinheit (244) des zweiten Endgeräts (24) konfiguriert ist, um, an das Informationsverarbeitungssystem (10), eine Registrierungsanforderung zum Registrieren der ersten Endidentifizierungsinformationen zu übertragen, die verwendet werden, um das erste Endgerät (21) und die zweiten Endidentifizierungsinformationen zu identifizieren, die verwendet werden, um das zweite Endgerät (24) selbst in Verbindung miteinander zu identifizieren.

2. Erstes Endgerät (21) nach Anspruch 1, wobei die Steuereinheit (216) konfiguriert ist, um eine Prozedur zum Übertragen der Daten an das ausgewählte zweite Endgerät (24) durch das Informationsverarbeitungssystem (10) unter Verwendung gemeinsamer Identifizierungsinformationen auszuführen, die erzeugt werden, um mit dem ausgewählten zweiten Endgerät (24) durch das Informationsverarbeitungssystem (10) geteilt zu werden.

3. Erstes Endgerät (21) nach Anspruch 1 oder 2, ferner umfassend:
eine Drucksteuereinheit (213), die konfiguriert ist, um Ausgabe von Druckdaten zu steuern;
wobei die Anzeigeeinheit (211) konfiguriert ist, um einen Bedienungsbildschirm anzuzeigen, auf dem eine Benutzerbedienung durchgeführt wird, um die Drucksteuereinheit (213) zu bedienen,
wobei die Steuereinheit (216) konfiguriert ist, um, von dem Informationsverarbeitungssystem (10), die Liste als Reaktion auf Benutzerbedienung auf dem auf der Anzeigeeinheit angezeigten Bedienungsbildschirm anzufordern, und um die Anzeigeeinheit (211) zu veranlassen, einen Bildschirm anzuzeigen, auf dem ein zweites Endgerät (24), an das die Daten übertragen werden sollen, basierend auf den Endidentifizierungsinformationen ausgewählt wird, die in der Liste beinhaltet sind, die von dem Informationsverarbeitungssystem als Reaktion auf die Anforderung übertragen werden.

4. Informationsteilungssystem umfassend ein erstes Endgerät (21) nach einem der Ansprüche 1 bis 3, ein oder mehrere zweite Endgeräte (24) und das Informationsverarbeitungssystem (10), das ein oder mehrere Informationsverarbeitungsgeräte beinhaltet,
wobei jedes der zweiten Endgeräte (24) umfasst:
eine Erlangungseinheit (242), die konfiguriert ist, um das Endidentfizierungsbild (23) zu erfassen und um die beinhalteten ersten Endidentifizierungsinformationen zu erlangen;
eine Empfangseinheit (243), die konfiguriert ist, um die von der Steuereinheit (216) übertragenen Daten zu empfangen;
eine Steuereinheit (244), die konfiguriert ist, um eine Registrierungsanforderung an das Informationsverarbeitungssystem (10) zu stellen, um die ersten Endidentifizierungsinformationen zu registrieren, die von der Erlangungseinheit erlangt werden und zweite Endidentifizierungsinformationen, die zum Identifizieren ihres eigenen Endgeräts in Verbindung miteinander verwendet werden,
wobei das Informationsverarbeitungssystem (10) beinhaltet:
die Registrierungseinheit (104), die konfiguriert ist, um die ersten Endidentifizierungsinformationen und die zweiten Endidentifizierungsinformationen in Verbindung miteinander als Reaktion auf die Registrierungsanforderung zu registrieren; und
eine Listenübertragungseinheit (105), die konfiguriert ist, um, an das erste Endgerät (21), die Liste zu übertragen, die die zweiten Endidentifizierungsinformationen beinhaltet, die in Verbindung mit den ersten Endidentifizierungsinformationen in der Registrierungseinheit (104) registriert werden, als Reaktion auf eine Anforderung von der Steuereinheit (216) des ersten Endgeräts (21).

5. Informationsteilungssystem nach Anspruch 4, wobei die Steuereinheit (216) des ersten Endgeräts (21) konfiguriert ist, um eine Prozedur zum Übertragen der Daten an das ausgewählte zweite Endgerät (24) durch das Informationsverarbeitungssystem (10) auszuführen, unter Verwendung von gemeinsamen Identifizierungsinformationen, die erzeugt werden, um mit dem ausgewählten zweiten Endgerät (24) durch das Informationsverarbeitungssystem geteilt zu werden.

6. Informationsteilungssystem nach Anspruch 5, wobei das erste Endgerät (21) und die zweiten Endgeräte (24) keine Kommunikation untereinander über Segmente hinweg durchführen können.

7. Informationsteilungssystem nach Anspruch 4, 5 oder 6, wobei das erste Endgerät (21) ferner umfasst:
eine Drucksteuereinheit (213), die konfiguriert ist, um Ausgabe von Druckdaten zu steuern; und
wobei die Anzeigeeinheit (211) konfiguriert ist, um einen Bedienungsbildschirm anzuzeigen, auf dem eine Benutzerbedienung durchgeführt wird, um die Drucksteuereinheit (213) zu bedienen, und
die Steuereinheit (216) des ersten Endgeräts konfiguriert ist, um, vom dem Informationsverarbeitungssystem (10), die Liste als Reaktion auf Benutzerbedienung auf dem auf der Anzeigeeinheit angezeigten Bedienungsbildschirm anzufordern, und um die Anzeigeeinheit zu veranlassen, einen Bildschirm anzuzeigen, auf dem ein zweites Endgerät, an das die Daten übertragen werden sollen, ausgewählt wird, basierend auf Endidentifizierungssinformationen, die in der Liste beinhaltet sind, die von dem Informationsverarbeitungssystem als Reaktion auf die Anforderung übertragen werden.

8. Informationsteilungsverfahren in einem Informationsteilungssystem beinhaltend ein erstes Endgerät (21), ein oder mehrere zweite Endgeräte (24) und ein Informationsverarbeitungssystem (10), das eine oder mehrere Informationsverarbeitungsgeräte beinhaltet, das Verfahren umfassend:
Ausgeben, durch das erste Endgerät (21), eines ersten Endidentifizierungsbilds (23) das erste Endidentifizierungsinformationen beinhaltet, die von den zweiten Endgeräten (24) erfasst werden sollen, um das erste Endgerät (21) zu identifizieren;
Erfassen, durch die zweiten Endgeräte (24), des ersten Endindentifizierungsbilds (23);
Erlangen, durch jedes der zweiten Endgeräte (24), der ersten Endidentifizierungsinformationen von dem Endidentifizierungsbild (23);
Vornehmen, durch jedes der zweiten Endgeräte (24), einer Registrierungsanforderung an das Informationsverarbeitungssystem (10), um die erlangten ersten Endidentifizierungsinformationen und zweiten Endidentifizierungsinformationen zu registrieren, die verwendet werden, um sich selbst zu identifizieren, in Verbindung miteinander;
Registrieren, durch das Informationsverarbeitungssystem (10), der ersten Endidentifizierungsinformationen und der zweiten Endidentifizierungsinformationen in Verbindung miteinander als Reaktion auf die Registrierungsanforderung;
Anfordern, durch das erste Endgerät (21) von dem Informationsverarbeitungssystem (10), einer Liste, die die zweiten Endidentifizierungsinformationen beinhaltet, die den ersten Endidentifizierungsinformationen zugeordnet ist und zum Identifizieren der jeweiligen zweiten Endgeräte (24) verwendet wird;
Übertragen, durch das Informationsverarbeitungssystem (10), an das erste Endgerät (21) als Reaktion auf die Anforderung der Liste, der Liste, die die zweiten Endidentifizierungsinformationen beinhalten, die in Verbindung mit den ersten Endidentifizierungsinformationen in einer Registrierungseinheit (104) des Informationsverarbeitungssystems (10) registriert sind;
Anzeigen, durch das erste Endgerät (21), einer Liste der zweiten Endgeräte (24), die die ersten Endidentifizierungsinformationen erlangt haben;
Übertragen, durch das erste Endgerät (21), von Daten an eines der zweiten Endgeräte (24), das von der angezeigten Liste ausgewählt wird; und
Empfangen, durch das ausgewählte zweite Endgerät (24), der Daten.

9. Informationsteilungsverfahren nach Anspruch 8, wobei das erste Endgerät (21) eine Prozedur zum Übertragen der Daten zusammen mit dem ausgewählten zweiten Endgerät (24) durch das Informationsverarbeitungssystem (10) unter Verwendung von gemeinsamen Identifizierungsinformationen ausführt, die erzeugt werden, um mit dem ausgewählten zweiten Endgerät (24) durch das Informationsverarbeitungssystem (10) geteilt zu werden.

10. Informationsteilungsverfahren nach Anspruch 9, wobei das erste Endgerät (21) und die zweiten Endgeräte (24) keine Kommunikation untereinander über Segmente hinweg durchführen können.

11. Informationsteilungsverfahren nach Anspruch 8, 9 oder 10, ferner umfassend:
Anzeigen, durch das erste Endgerät (21), eines Bedienungsbildschirms, auf dem eine Benutzerbedienung gegen eine Drucksteuereinheit, die Ausgabe von Druckdaten steuert, durchgeführt wird, wobei
bei der Anforderung der Liste, das erste Endgerät (21) die Liste vom Informationsverarbeitungssystem (10) als Reaktion auf eine Benutzerbedienung auf dem Bedienungsbildschirm anfordert, und einen Bildschirm anzeigt, auf dem ein Endgerät, an das die Daten übertragen werden sollen, basierend auf Endidentifizierungsinformationen ausgewählt wird, die in der von dem Informationsverarbeitungssystem (10) übertragenen Liste als Reaktion auf die Anforderung der Liste beinhaltet sind.

## Revendications

1. Premier dispositif terminal (21) comprenant :
une unité de sortie (214) configurée de manière à fournir en sortie une image d'identification de terminal (23), incluant des premières informations d'identification de terminal, devant être capturée par un ou plusieurs seconds dispositifs terminaux (24) en vue d'identifier le premier dispositif terminal (21) ;
une unité de commande (216) configurée de manière à :
demander, auprès d'un système de traitement d'informations (10), une liste de secondes informations d'identification de terminal associées aux premières informations d'identification de terminal et utilisées en vue d'identifier les seconds dispositifs terminaux (24), ce qui permet d'acquérir par conséquent, auprès d'une unité d'enregistrement (104) d'un système de traitement d'informations externe (10), une liste de seconds dispositifs terminaux qui ont capturé l'image d'identification de terminal et qui ont acquis les premières informations d'identification de terminal incluses ; et
exécuter un processus consistant à transmettre, au système de traitement d'informations (10), une demande de transmission de contenu pour permettre au premier dispositif terminal (21) de transmettre des données à un second dispositif terminal sélectionné à partir de la liste de seconds dispositifs terminaux qui ont acquis les premières informations d'identification de terminal ; et
une unité d'affichage (211) configurée de manière à afficher la liste de seconds dispositifs terminaux (24) qui ont acquis les premières informations d'identification de terminal ;
moyennant quoi une unité de commande (244) du second dispositif terminal (24) est configurée de manière à transmettre, au système de traitement d'informations (10), une demande d'enregistrement visant à enregistrer les premières informations d'identification de terminal utilisées en vue d'identifier le premier dispositif terminal (21), et les secondes informations d'identification de terminal utilisées en vue d'identifier le second dispositif terminal (24) lui-même, en association les unes avec les autres.

2. Premier dispositif terminal (21) selon la revendication 1, dans lequel l'unité de commande (216) est configurée de manière à exécuter une procédure consistant à transmettre les données au second dispositif terminal sélectionné (24) par l'intermédiaire du système de traitement d'informations (10) en utilisant des informations d'identification communes générées en vue d'être partagées avec le second dispositif terminal sélectionné (24) par le système de traitement d'informations (10).

3. Premier dispositif terminal (21) selon la revendication 1 ou 2, comprenant en outre :
une unité de commande d'impression (213) configurée de manière à commander la fourniture en sortie de données d'impression ;
l'unité d'affichage (211) configurée de manière à afficher un écran d'opération sur lequel une opération d'utilisateur est mise en œuvre en vue d'exploiter l'unité de commande d'impression (213) ;
dans lequel l'unité de commande (216) est configurée de manière à demander la liste, auprès du système de traitement d'informations (10), en réponse à une opération d'utilisateur sur l'écran d'opération affiché sur l'unité d'affichage, et à amener l'unité d'affichage (211) à afficher un écran sur lequel un second dispositif terminal (24), auquel les données doivent être transmises, est sélectionné, sur la base d'informations d'identification de terminal incluses dans la liste transmise à partir du système de traitement d'informations en réponse à la demande.

4. Système de partage d'informations comprenant un premier dispositif terminal (21) selon l'une quelconque des revendications 1 à 3, un ou plusieurs seconds dispositifs terminaux (24) et le système de traitement d'informations (10) incluant un ou plusieurs dispositifs de traitement d'informations ;
dans lequel chacun des seconds dispositifs terminaux (24) comprend :
une unité d'acquisition (242) configurée de manière à capturer l'image d'identification de terminal (23) et à acquérir les premières informations d'identification de terminal incluses ;
une unité de réception (243) configurée de manière à recevoir les données transmises par l'unité de commande (216) ;
une unité de commande (244) configurée de manière à effectuer une demande d'enregistrement auprès du système de traitement d'informations (10) en vue d'enregistrer les premières informations d'identification de terminal acquises par l'unité d'acquisition et les secondes informations d'identification de terminal utilisées en vue d'identifier son propre dispositif terminal, en association les unes avec les autres ;
dans lequel le système de traitement d'informations (10) inclut :
l'unité d'enregistrement (104) configurée de manière à enregistrer les premières informations d'identification de terminal et les secondes informations d'identification de terminal, en association les unes avec les autres, en réponse à la demande d'enregistrement ; et
une unité de transmission de liste (105) configurée de manière à transmettre, au premier dispositif terminal (21), la liste incluant les secondes informations d'identification de terminal enregistrées en association avec les premières informations d'identification de terminal dans l'unité d'enregistrement (104), en réponse à une demande provenant de l'unité de commande (216) du premier dispositif terminal (21).

5. Système de partage d'informations selon la revendication 4, dans lequel l'unité de commande (216) du premier dispositif terminal (21) est configurée de manière à exécuter une procédure consistant à transmettre les données au second dispositif terminal sélectionné (24), par l'intermédiaire du système de traitement d'informations (10), en utilisant des informations d'identification communes générées de manière à être partagées avec le second dispositif terminal sélectionné (24) par le système de traitement d'informations.

6. Système de partage d'informations selon la revendication 5, dans lequel le premier dispositif terminal (21) et les seconds dispositifs terminaux (24) ne peuvent pas mettre en œuvre une communication entre eux à travers des segments.

7. Système de partage d'informations selon la revendication 4, 5 ou 6, dans lequel :
le premier dispositif terminal (21) comprend en outre :
une unité de commande d'impression (213) configurée de manière à commander la fourniture en sortie de données d'impression ; et
dans lequel l'unité d'affichage (211) est configurée de manière à afficher un écran d'opération sur lequel une opération d'utilisateur est mise en œuvre en vue d'exploiter l'unité de commande d'impression (213) ; et
dans lequel l'unité de commande (216) du premier dispositif terminal est configurée de manière à demander la liste, auprès du système de traitement d'informations (10), en réponse à une opération d'utilisateur sur l'écran d'opération affiché sur l'unité d'affichage, et à amener l'unité d'affichage à afficher un écran sur lequel un second dispositif terminal, auquel les données doivent être transmises, est sélectionné, sur la base d'informations d'identification de terminal incluses dans la liste transmise à partir du système de traitement d'informations en réponse à la demande.

8. Procédé de partage d'informations dans un système de partage d'informations incluant un premier dispositif terminal (21), un ou plusieurs seconds dispositifs terminaux (24) et un système de traitement d'informations (10) qui inclut un ou plusieurs dispositifs de traitement d'informations, le procédé comprenant les étapes ci-dessous consistant à :
fournir en sortie, par le biais du premier dispositif terminal (21), une première image d'identification de terminal (23), incluant des premières informations d'identification de terminal, devant être capturée par les seconds dispositifs terminaux (24), en vue d'identifier le premier dispositif terminal (21) ;
capturer, par le biais des seconds dispositifs terminaux (24), la première image d'identification de terminal (23) ;
acquérir, par le biais de chacun des seconds dispositifs terminaux (24), les premières informations d'identification de terminal, à partir de l'image d'identification de terminal (23) ;
effectuer, par le biais de chacun des seconds dispositifs terminaux (24), une demande d'enregistrement auprès du système de traitement d'informations (10) en vue d'enregistrer les premières informations d'identification de terminal acquises et les secondes informations d'identification de terminal, utilisées en vue de s'identifier personnellement, en association les unes avec les autres ;
enregistrer, par le biais du système de traitement d'informations (10), les premières informations d'identification de terminal et les secondes informations d'identification de terminal, en association les unes avec les autres, en réponse à la demande d'enregistrement ;
demander, par le biais du premier dispositif terminal (21), auprès du système de traitement d'informations (10), une liste incluant les secondes informations d'identification de terminal associées aux premières informations d'identification de terminal et utilisées en vue d'identifier les seconds dispositifs terminaux respectifs (24) ;
transmettre, par le biais du système de traitement d'informations (10), au premier dispositif terminal (21), en réponse à l'étape de demande de la liste, la liste incluant les secondes informations d'identification de terminal, enregistrées en association avec les premières informations d'identification de terminal, dans une unité d'enregistrement (104) du système de traitement d'informations (10) ;
afficher, par le biais du premier dispositif terminal (21), une liste des seconds dispositifs terminaux (24) qui ont acquis les premières informations d'identification de terminal ;
transmettre, par le biais du premier dispositif terminal (21), des données, à l'un des seconds dispositifs terminaux (24) sélectionnés à partir de la liste affichée ; et
recevoir les données, par le biais du second dispositif terminal sélectionné (24).

9. Procédé de partage d'informations selon la revendication 8, dans lequel le premier dispositif terminal (21) exécute une procédure consistant à transmettre les données, conjointement avec le second dispositif terminal sélectionné (24), par l'intermédiaire du système de traitement d'informations (10), en utilisant des informations d'identification communes générées en vue d'être partagées avec le second dispositif terminal sélectionné (24) par le système de traitement d'informations (10).

10. Procédé de partage d'informations selon la revendication 9, dans lequel le premier dispositif terminal (21) et les seconds dispositifs terminaux (24) ne peuvent pas mettre en œuvre une communication entre eux à travers des segments.

11. Procédé de partage d'informations selon la revendication 8, 9 ou 10, comprenant en outre l'étape ci-dessous consistant à : afficher, par le biais du premier dispositif terminal (21), un écran d'opération sur lequel est mise en œuvre une opération d'utilisateur relativement à une unité de commande d'impression qui commande la fourniture en sortie de données d'impression, dans lequel :
à l'étape de demande de la liste, le premier dispositif terminal (21) demande la liste auprès du système de traitement d'informations (10) en réponse à une opération d'utilisateur sur l'écran d'opération, et affiche un écran sur lequel un dispositif terminal, auquel les données doivent être transmises, est sélectionné, sur la base d'informations d'identification de terminal incluses dans la liste transmise à partir du système de traitement d'informations (10) en réponse à l'étape de demande de la liste.
